(19) Europäisches Patentamt
European Patent Office
Office européen des brevets

(11) Veröffentlichungsnummer: **0 175 324**
**B1**

(12) # EUROPÄISCHE PATENTSCHRIFT

(45) Veröffentlichungstag der Patentschrift: **06.12.89**

(51) Int. Cl.⁴: **C 09 B 45/16,** D 06 P 1/10

(21) Anmeldenummer: **85111689.7**

(22) Anmeldetag: **16.09.85**

(54) **Unsymmetrische 1:2-Chromkomplexfarbstoffe.**

(30) Priorität: **15.09.84 DE 3433951**

(43) Veröffentlichungstag der Anmeldung:
**26.03.86 Patentblatt 86/13**

(45) Bekanntmachung des Hinweises auf die Patenterteilung:
**06.12.89 Patentblatt 89/49**

(84) Benannte Vertragsstaaten:
**CH DE FR GB IT LI**

(56) Entgegenhaltungen:
**BE-A-689 976**
**FR-A-1 486 227**

**CHEMICAL ABSTRACTS, Band 86, Nr. 14, 4. April 1977, Seite 47, Nr. 90848k, Columbus, Ohio, US; & JP - A - 76 129 495 (HODOGAYA CHEMICAL CO., LTD.) 11.11.1976**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Grychtol, Klaus, Dr., Seebacher Strasse 96a, D-6702 Bad Duerkheim (DE)**

**EP 0 175 324 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft Verbindungen der allgemeinen Formel I

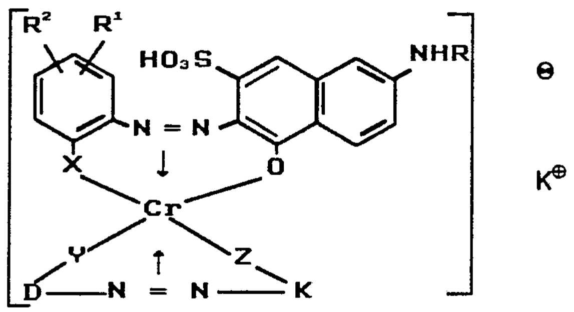

I

in der

$K^{\oplus}$ ein Kation,
R Phenyl,
$R^1$ Wasserstoff oder Nitro,
$R^2$ Nitro,
X = Y = Z = -O-,
D durch Sulfo substituiertes Phenylen oder Naphthylen und
K gegebenenfalls durch Sulfo substituiertes 1,2-Naphthylen, 1-Arylpyrazolonyl oder gegebenenfalls durch Chlor, Brom, Methyl oder Methoxy substituiertes Acetoacetaryl sind.

Kationen $K^{\oplus}$ sind z. B.: $H^{\oplus}$, $Li^{\oplus}$, $Na^{\oplus}$, $K^{\oplus}$ sowie gegebenenfalls substituierte Ammoniumionen, von denen im einzelnen beispielsweise genannt seien:

$NH_4^{\oplus}$, $^{\oplus}NH_3CH_2CH_2OH$, $H_2N^{\oplus}(CH_2CH_2OH)_2$, $^{\oplus}NH(CH_2CH_2OH)_3$,

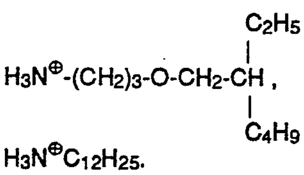, $H_2N^{\oplus}$= C(NH 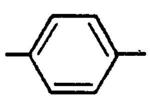 $CH_3)_2$, $HN^{\oplus}(C_{13}H_{27})_3$ oder

$H_3N^{\oplus}C_{12}H_{25}$.

Einzelne bevorzugte Diazokomponenten $D-NH_2$ sind z. B.:

2-Aminophenol-4-sulfonsäure, 1-Amino-2-naphthol-4-sulfonsäure oder 2-Amino-1-naphthol-5-sulfonsäure.

Wenn der Rest K für 1-Arylpyrazolonyl steht, so kann der Arylrest dabei durch Chlor, Methyl, Methoxy oder Hydroxysulfonyl substituiert sein.

Einzelne Verbindungen KH sind beispielsweise:

2-Naphthol, 1-Naphthol-8-sulfonsäure, 2-Naphthol-6-sulfonsäure, 1-Phenyl-3-methyl-5-pyrazolon, 1,3-Diphenyl-5-pyrazolon, 1-Phenyl-carbäthoxy-5-pyrazolon, 1-(2'-Methylphenyl)-3-methyl-5-pyrazolon, 1-(4'-Chlorphenyl)-3-methyl-5-pyrazolon, 1-(2',5'-Dichlorphenyl)-3-methyl-5-pyrazolon, 1-Phenyl-3-methyl-5-pyrazolon-4'-carbonsäure, 1-Phenyl-3-methyl-5-pyrazolon-3'- oder -4'-sulfonsäure, 1,3-Diphenyl-5-pyrazolon-2'-sulfonsäure, 1-(2'-Chlorphenyl)-3-methyl-5-pyrazolon-5'-sulfonsäure oder N-Acetoacetyl-phenylamid.

Zur Herstellung der Verbindungen der Formel I kann man z. B. an Chrom-1:1-Komplexe der Formel

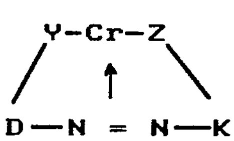

Verbindungen der Formel

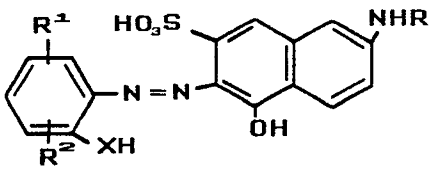

nach an sich bekannten Methoden anlagern.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich zum Färben von natürlichen und synthetischen Polyamiden, insbesondere Wolle und Nylon. In Form der langkettigen Ammoniumsalze sind sie auch als Farbstoffe für Druckfarben, Kugelschreiberpasten und Tinten brauchbar.

Auf Textilien erhält man rote bis schwarze Farbtöne mit teilweise sehr guten Echtheiten, insbesondere ist Walkechtheit hervorzuheben.

Aus der FR-A-1 486 227 sind Chromkomplexfarbstoffe ähnlicher Struktur bekannt. Es hat sich jedoch gezeigt, daß ein solcher Farbstoff bei seiner Anwendung noch Mängel aufweist.

**Beispiele**

**Beispiel 1**

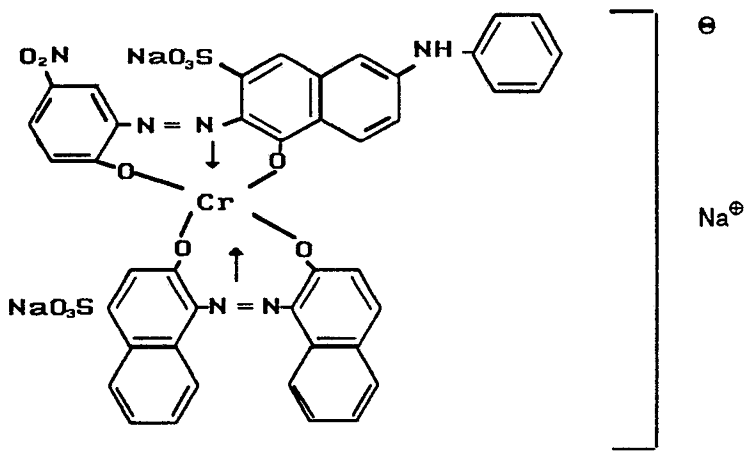

278 Teile 4-Nitro-2-aminophenol werden in 1800 Teilen Wasser angerührt und mit 720 Teilen verdünnter Salzsäure gelöst. Man fügt 1300 Teile Eis zu und läßt in 15 Minuten 544 Raumteile Natriumnitritlösung (3.3n) zulaufen. Mit schwachem Nitritüberschuß wird 10 Minuten nachgerührt und anschließend der Überschuß mit wenig Amidosulfosäure zerstört. Die Diazosuspension läßt man dann in 20 Minuten in eine Kupplungslösung aus 578 Teilen Phenyl-I-Säure in 3600 Teilen Wasser, 400 Teilen Eis und 160 Teile NaOH (ber. 100 %) einlaufen. Die Kupplung ist nach 30 Minuten beendet. Mit 72 Raumteilen verdünnter Salzsäure wird ein pH von 7,5 eingestellt und die Suspension des Azofarbstoffs wird mit 6000 Teilen Wasser verdünnt.

Man gibt dann dem Preßkuchen des 1:1-Cr-Komplexes aus 94 Teilen Chrom und 692 Teilen des Monoazofarbstoffs aus diazotierter 1-Amino-2-hydroxynaphthalin-4-sulfonsäure und 2-Hydroxynaphthalin zu, erhitzt auf 90°C und hält durch Zutropfen von verdünnter Natronlauge einen pH von 7,5 bis 8 ein. Nach einer Klärfiltration wird der Farbstoff durch Sprühtrocknung isoliert. Man erhält 2350 Teile eines schwarzen Pulvers. Der Farbstoff färbt polyamidhaltige Materialien in marineblauem Farbton mit sehr guten Echtheiten. Hervorzuheben ist die Walkechtheit, die das Niveau von Nachchromierfarbstoffen erreicht.

Ein Farbstoff mit ähnlich guten Eigenschaften wird nach dem gleichen Verfahren mit dem folgenden 1:1-Komplex erhalten.

**Beispiel 2**

1:1-Cr-Komplex aus

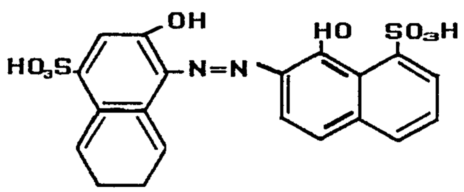

(Farbton auf Wolle: blau)

**Beispiel 3**

1:1-Cr-Komplex aus

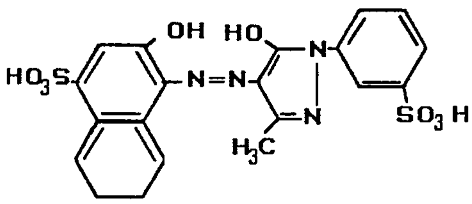

(Farbton auf Wolle: violett)

**Beispiel 4**

Einen Farbstoff mit ähnlichen Eigenschaften erhält man durch die Anlagerung des 1:1-Cr-Komplexes von

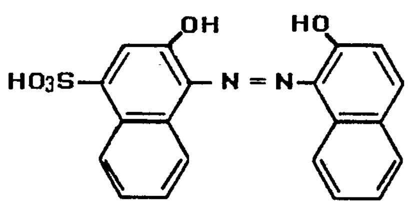

an

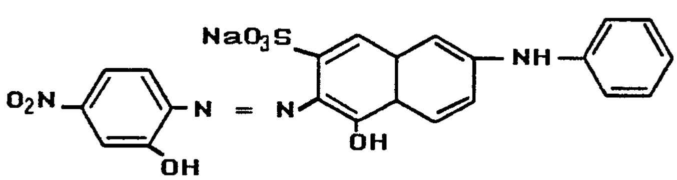

(Farbton auf Wolle: blau)

**Beispiel 5**

Einen Farbstoff mit ähnlichen Eigenschaften erhält man durch Anlagerung des 1:1-Cr-Komplexes von

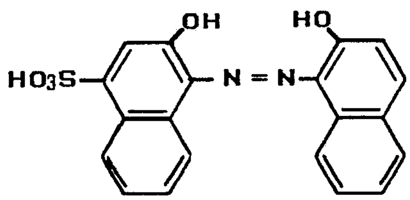

an

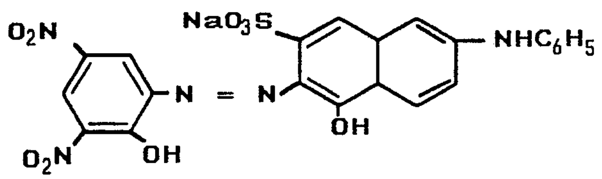

(Farbton auf Wolle: schwarz)

**Patentansprüche**

1. Verbindungen der allgemeinen Formel I

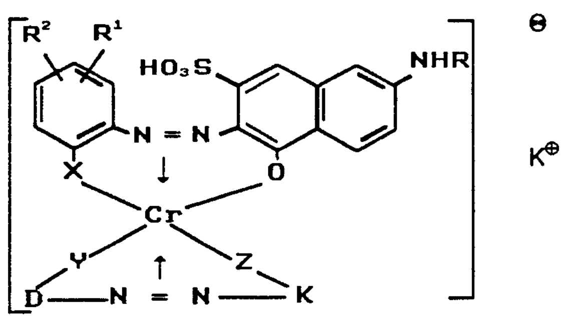

I

in der

$K^{\oplus}$ ein Kation,
R Phenyl,
$R^1$ Wasserstoff oder Nitro,
$R^2$ Nitro,
X = Y = Z = -O-,
D durch Sulfo substituiertes Phenylen oder Naphthylen und
K gegebenenfalls durch Sulfo substituiertes 1,2-Naphthylen, 1-Arylpyrazolonyl oder gegebenenfalls durch Chlor, Brom, Methyl oder Methoxy substituiertes Acetoacetaryl sind.

2. Verwendung der Verbindungen gemäß Anspruch 1 zum Färben stickstoffhaltiger textiler Fasern sowie von Leder.

## Claims

1. A compound of the formula I

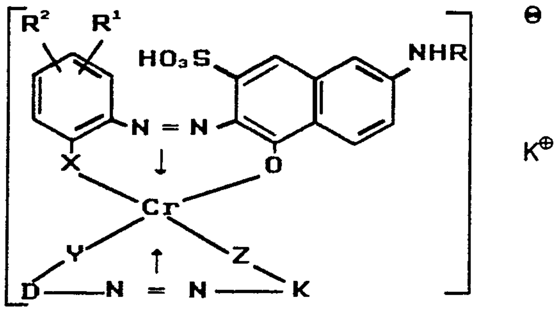

I

where $K^\oplus$ is a cation, R is phenyl, $R^1$ is hydrogen or nitro, $R^2$ is nitro, X, Y and Z are each -O-, D is naphthylene or phenylene which is substituted by sulfo, and K is unsubstituted or sulfo-substituted 1,2-naphthylene, 1-arylpyrazolonyl, or acetoacetaryl which is unsubstituted or substituted by chlorine, bromine, methyl or methoxy.

2. Use of a compound as claimed in claim 1 for dyeing nitrogenous textile fibers and leather.

## Revendications

1. Composés de formule générale I

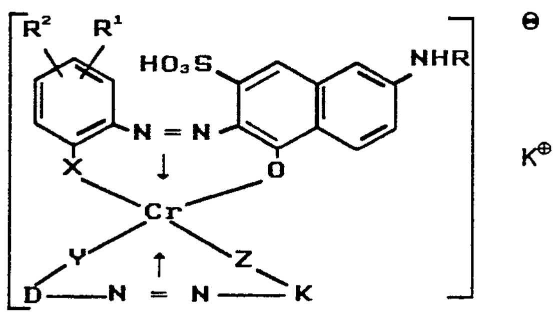

I

dans laquelle

$K^\oplus$ = est un cation,
R est un groupement phényle,
$R^1$ est un atome d'hydrogène ou un groupement nitro,
$R^2$ est un groupement nitro,
X = Y = Z = -O-,
D est un groupement phénylène ou naphtylène à substitution sulfo, et
K est un groupement 1,2-naphtylène éventuellement à substitution sulfo, un groupement 1-arylpyrazolonyle ou un groupement acétoacétaryle éventuellement substitué par des radicaux chloro, bromo, méthyle ou méthoxy.

2. Utilisation des composés selon la revendication 1, comme colorants de fibres textiles azotées ainsi que de cuirs.